Europäisches Patentamt

European Patent Office

Office européen des brevets

(19)

(11) **EP 1 060 790 A1**

(12) # DEMANDE DE BREVET EUROPEEN

| | |
|---|---|
| (43) Date de publication:<br>**20.12.2000 Bulletin 2000/51** | (51) Int Cl.⁷: **B01J 20/18**, B01J 39/14,<br>B01D 53/04 |

(21) Numéro de dépôt: **00401508.7**

(22) Date de dépôt: **29.05.2000**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **18.06.1999 FR 9907739**

(71) Demandeur: **L'AIR LIQUIDE, SOCIETE ANONYME POUR L'ETUDE ET L'EXPLOITATION DES PROCEDES GEORGES CLAUDE 75321 Paris Cédex 07 (FR)**

(72) Inventeur: **Moreau, Serge 78140 Velizy Villacoublay (FR)**

(74) Mandataire: **Le Moenner, Gabriel et al Societé l'Air Liquide Service Brevets et Marques 75, Quai d'Orsay 75321 Paris Cédex 07 (FR)**

(54) **Solution aqueuse utilisable dans un procédé d'échange ions**

(57) L'invention concerne une solution aqueuse ayant un pH supérieur à 5, de préférence d'au moins 6.5, utilisable dans un procédé d'échange ions, en particulier un procédé de fabrication de zéolite. Cette solution aqueuse contient des cations métalliques, tel le zinc, et un agent complexant desdits cations métalliques, tel l'acide citrique ou un sel de cet acide. La proportion de cations libres en solution représente de 0.1 % à 99 %, de préférence de 1 à 30%, de la quantité totale dudit métal dans la solution. L'invention porte aussi sur un procédé de fabrication de zéolites X ou A mettant en oeuvre une telle solution aqueuse et l'utilisation des zéolites ainsi obtenues pour séparer, purifier ou convertir un ou des constituants d'un flux gazeux, tels l'air, les gaz de synthèse ou les hydrocarbures, notamment les oléfines, par mise en ouvre d'un procédé d'adsorption, notamment de type PSA, VSA ou TSA.

Printed by Jouve, 75001 PARIS (FR)

**Description**

L'invention concerne une solution aqueuse et son utilisation dans un procédé d'échange ions, en vue de la fabrication de zéolites échangées par des cations métalliques, en particulier des cations de zinc.

Les gaz et les mélanges gazeux trouvent des applications dans de nombreux domaines industriels. Ainsi, les gaz de l'air, tels notamment l'oxygène et l'azote, sont couramment utilisés dans de nombreux domaines, tel l'électronique, la combustion, le médical, l'alimentaire, le soudage..... En outre, il en va de même d'autres gaz et mélanges gazeux, tel les gaz de synthèse, encore appelés 'syngaz', ou les hydrocarbures, telles notamment les oléfines .

Actuellement, l'une des techniques utilisées pour produire ou purifier les gaz, en particulier les gaz de l'air, est la technique dite "PSA" (pour Pressure Swing Adsorption), laquelle recouvre non seulement les procédés PSA proprement dits, mais aussi les procédés analogues, tels les procédés VPSA ou VSA (Vacuum "Pressure" Swing Adsorption), TSA (Temperature Swing Adsorption) ou MPSA (Mixed Pressure Swing Adsorption).

Selon cette technique PSA, lorsque le mélange gazeux à séparer est, par exemple, l'air et que le composant à récupérer est l'oxygène, l'oxygène est séparé dudit mélange gazeux grâce à une adsorption préférentielle d'au moins l'azote sur un ou plusieurs matériaux adsorbant préférentiellement au moins l'azote et soumis à des cycles de pression donnée dans la zone de séparation. L'oxygène qui ne s'adsorbe pas ou peu est récupéré en sortie de ladite zone de séparation à une pureté, en général, supérieure à 90 %, voire à 93%.

Plus généralement, un procédé PSA de séparation d'un mélange gazeux comprenant un premier composé s'adsorbant préférentiellement sur un matériau adsorbant et un deuxième composé s'adsorbant moins préférentiellement sur ledit matériau adsorbant que ledit premier composé, en vue de la production dudit deuxième composé, comprend de manière cyclique :

- une étape d'adsorption préférentielle d'au moins ledit premier composé sur ledit matériau adsorbant, à une pression d'adsorption dite "pression haute", avec récupération d'au moins une partie du deuxième composé ainsi produit;
- une étape de désorption du premier composé ainsi piégé par l'adsorbant, à une pression de désorption inférieure à la pression d'adsorption, dite "pression basse";
- une étape de recompression de la zone de séparation comprenant l'adsorbant, par passage de ladite pression basse à ladite pression haute.

De manière similaire, pour pouvoir être utilisés au plan industriel, certains gaz nécessitent d'être purifiés au préalable, notamment par adsorption et/ou par catalyse, pour convertir, transformer ou éliminer certains des composés ou des impuretés qu'ils contiennent.

Ainsi, l'air atmosphérique est habituellement débarrassé de tout ou partie des impuretés qu'il contient notamment vapeur d'eau, dioxyde de carbone, monoxyde de carbone, hydrocarbures, oxydes d'azote et hydrogène, avant d'être soumis à des étapes subséquentes de fractionnement par distillation cryogénique et ce, afin d'éviter que ces impuretés ne viennent détériorer les performances des unités de séparation d'air, notamment les colonnes de distillation cryogéniques. L'élimination de ces impuretés est réalisée habituellement au moyen d'un ou plusieurs adsorbants, en particulier les zéolites, éventuellement associés à de l'alumine.

De façon similaire, il est aussi connu d'éliminer les impuretés, notamment les résidus métalliques, susceptibles d'être présentes dans les oléfines pour éviter leur dégradation ou leur coloration, l'élimination de ces impuretés pouvant être réalisée, par exemple, au moyen d'adsorbant.

Il est connu que l'efficacité de séparation ou de purification du fluide, notamment d'un mélange gazeux comme l'air, dépend de nombreux paramètres, notamment de la composition du fluide à traiter, du type de matériau adsorbant utilisé et de l'affinité de celui-ci pour les composés à adsorber ou à convertir, de la taille des particules d'adsorbant, de la composition de ces particules et de leur agencement dans la ou les zones d'adsorption.

En général, la taille de ces particules d'adsorbant ou de catalyseur est très variable, étant donné que l'adsorbant peut avoir une taille de quelques $\mu m$ (poudre) à quelques mm et, le plus souvent, de l'ordre de 1 mm à 3 mm.

Actuellement, les matériaux zéolitiques sont les adsorbants les plus utilisés dans les installations de séparation ou de purification de gaz mettant en oeuvre un procédé de séparation par adsorption.

Or, pour améliorer l'efficacité d'adsorption, il est usuel d'introduire des cations métalliques mono, di et/ou trivalents dans les particules de zéolites, par exemple des cations de métaux alcalins, alcalino-terreux, de métaux de transition et/ou lanthanides.

Habituellement, ces cations métalliques sont incorporés lors de la synthèse des particules de zéolite et/ou insérés subséquemment par une technique d'échange d'ions, c'est-à-dire, en général, par mise en contact des particules de zéolite brute avec une solution d'un ou plusieurs sels métalliques comprenant le ou les cations métalliques à incorporer dans la structure zéolitique et récupération subséquente des particules de zéolite échangée, c'est-à-dire de zéolite contenant une quantité donnée de cations métalliques.

La proportion (en %) de cations métalliques introduits dans la structure zéolitique par rapport à la capacité totale d'échange est appelée le taux d'échange.

De telles zéolites sont notamment décrites dans les documents EP-A-486384, EP-A-606848, EP-A-589391, EP-A-589406, EP-A-548755, US-A-268023, EP-A-109063 et EP-A-760248.

Par ailleurs, le document US-A-5,419,891 décrit une zéolite de type X échangée par des cations lithium et zinc présentant des propriétés d'adsorption améliorées pour la séparation des gaz polaires.

Selon ce document, l'échange d'ion ayant lieu durant le processus de fabrication des échantillons zéolitiques est réalisé avec une solution d'échange de sels de zinc ayant une concentration en zinc de 0.1 N et un pH compris entre 5.6 et 7.0.

Or, de telles conditions d'échange ne peuvent pas être considérées comme idéales ou, pour le moins, favorables ou adaptées à une exploitation à l'échelle industrielle car elles conduisent à certains problèmes.

En effet, il est connu qu'en solution aqueuse, les sels de zinc forment avec les ions OH$^-$, un hydroxyde Zn(OH)$_2$ peu soluble ayant un produit de solubilité S de $1,8.10^{-14}$.

Le produit de solubilité S est défini ci-après par l'équation (I) :

$$S = [Zn^{2+}]^* [OH^-]^2 \qquad\qquad (I)$$

où : $[Zn^{2+}]$ et $[OH^-]$ sont les concentrations en mole.litre$^{-1}$ en équilibre avec le précipité Zn(OH)$_2$.

Il apparaît alors immédiatement que Zn(OH)$_2$ peut précipiter si le pH dépasse la valeur de 7.7 et si la concentration en sel de zinc dépasse 0.1 N.

Il s'ensuit alors que les exemples donnés dans le document US-A-5,419,891 sont effectués dans des conditions très proches de la précipitation et sont donc difficiles à mener surtout dans des conditions industrielles.

De plus, la zéolite présente des propriétés basiques. Par exemple, une zéolite 13X agglomérée (liant + zéolite) immergée dans l'eau peut faire remonter le pH d'une solution aqueuse jusqu'à une valeur qui peut atteindre environ 10.

De là, mettre en contact une zéolite industrielle avec une solution de sel de zinc initialement à pH autour de 5.5 à 7 engendre inévitablement une augmentation du pH de solution, ce qui a pour résultat de faire précipiter de l'hydroxyde de zinc, lequel hydroxyde de zinc va alors obturer la macroporosité des agglomérats de zéolite et se déposer sur la surface des cristaux de zéolite.

Une conséquence importante de ce phénomène est que la cinétique d'adsorption de la zéolite va alors inévitablement diminuer, du fait de la présence de ce dépôt dans les agglomérats activés et les propriétés d'adsorption des particules de zéolites ainsi produites vont s'en trouver alors aussi altérées.

Pour tenter de résoudre ce problème de précipitation de Zn(OH)$_2$, il peut être envisagé de diluer la solution saline de ZnCl$_2$, de manière à supprimer ou minimiser la précipitation de Zn(OH)$_2$.

Cependant, une telle dilution pose le problème de la mise en oeuvre industrielle de solutions très diluées, c'est-à-dire de pouvoir réaliser et contrôler efficacement ce type de dilution à l'échelle industrielle lorsque de très grandes quantités de solution sont nécessaires si l'on souhaite garder le zinc en solution, c'est-à-dire ne pas franchir la valeur limite du produit de solubilité. Par exemple, à pH=9, la concentration en Zn$^{2+}$ ne doit pas dépasser $1,8.10^{-4}$ N.

Une autre solution possible pour diminuer la précipitation d'hydroxyde de zinc consiste à diminuer le pH jusqu'à des valeurs qui permettent une neutralisation de l'alcalinité de la zéolite au moment de l'échange et conduisent à un pH final autour de 7.

Pour ce faire, il est alors indispensable de respecter des valeurs initiales de pH de la solution saline inférieures à 6, voire même inférieures à 5, c'est-à-dire d'utiliser une solution aqueuse très acide.

De ce fait, cette méthode ne peut pas être considérée comme totalement satisfaisante à l'échelle industrielle car les billes ou particules de zéolite agglomérée, qui ont une taille habituellement comprise entre 1 et 2 mm environ, ne peuvent pas être pénétrées aisément par l'acidité et le coeur de la particule de zéolite conserve un pH basique.

Il s'ensuit alors que l'hydroxyde de zinc précipite à l'intérieur des particules de zéolite, tandis que la surface desdites particules de zéolite soumise à un pH très acide va, en outre, être dégradée, c'est-à-dire détériorée par l'acidité de la solution.

Pour corriger ou minimiser toute précipitation de l'hydroxyde de zinc à l'intérieur des particules de zéolite, on peut décider d'acidifier encore plus la solution. Or, cela engendre alors aussi une attaque supplémentaire et inévitable de la surface de la zéolite par les ions H$^+$ et donc une baisse notable des capacités d'adsorption du produit fini. Cette méthode n'est donc pas non plus adéquate.

Par ailleurs, la publication de W. Lutz et col. ; J. Chem. Soc. Faraday Trans, 1990, 86(10), 1899-1904, décrit le problème lié à la précipitation de Zn(OH)$_2$ lors de l'échange de zéolite de type A et de type X et Y en poudre, et préconise une voie d'amélioration du procédé d'échange par le biais d'une mise en solution du sel de zinc dans de l'ammoniaque à 2%.

Or, l'homme du métier comprend immédiatement que cette publictaion n'est pas directement transposable à l'échelle industrielle., étant donné qu'échanger sous agitation une zéolite en poudre monocristalline dont la taille de particule est de l'ordre de 7 μm est bien plus facile que d'échanger des billes agglomérées de taille de l'ordre de 1 mm à 2 mm car, dans le second cas, la diffusion des réactifs dans les macropores de la billes sont prédominants et il apparaît un gradient de concentrations dont on n'a pas le contrôle comme dans le cas d'une suspension homogène de monocristaux.

Par ailleurs, l'utilisation de solutions ammoniacales présente des inconvénients évidents, notamment liés aux conditions de travail et à la pollution de l'environnement.

Le but de la présente invention est donc d'améliorer les procédés de fabrication de zéolites par échange d'ions connus.

En d'autres termes, l'invention vise à résoudre le problème de précipitation des cations métalliques, en particulier des cations de zinc, dans une solution aqueuse utilisée pour introduire des cations métalliques dans un adsorbant zéolitique lors de la mise en oeuvre d'un procédé d'échange d'ions.

La présente invention concerne alors une solution aqueuse, en particulier utilisable dans un procédé d'échange ions, ayant un pH supérieur à 5 et contenant des cations métalliques d'au moins un métal et au moins un agent complexant desdits cations métalliques, dans laquelle la proportion de cations métalliques libres en solution représente de 0.1 % à 99 % de la quantité totale dudit métal dans ladite solution.

Dans le cadre de l'invention, on entend par "cations métalliques libres", l'ensemble des cations métalliques non-complexés à l'agent complexant contenu dans la solution aqueuse et par "quantité totale dudit métal" la somme de l'ensemble des cations métalliques libres et de l'ensemble des cations métalliques complexés audit agent complexant.

Selon le cas, la solution aqueuse de l'invention peut inclure l'une ou plusieurs des caractéristiques suivantes :

- la proportion de cations métalliques libres en solution représente de 0.1 % à 50 % de la quantité totale dudit métal dans ladite solution, de préférence de 1 % à 30%.
- le pH est supérieur à 6, de préférence le pH est supérieur ou égal à 6.5, préférentiellement le pH est compris entre 7 et 10 environ.
- la concentration totale en ledit métal est d'au moins 0.02 M, de préférence d'au moins 0.05 M, préférentiellement d'au moins 0.15 M.
- les cations métalliques sont des cations divalents, de préférence les cations métalliques sont choisis dans le groupe formé par les cations de métaux alcalino-terreux, les métaux de transition et les lanthanides.
- les cations métalliques sont sous forme de sel soluble, par exemple sous forme de chlorure.
- les cations métalliques sont des cations de zinc, de nickel ou de calcium, de préférence des cations de zinc.
- l'agent complexant est un acide selon la définition de Lewis ou de Brônstedt ou un sel d'un tel acide, éventuellement au moins partiellement dissocié en ions en solution. En particulier, l'agent complexant est l'acide citrique ou un sel mono, di ou trisodique de l'acide citrique.
- le rapport stoechiométrique de la proportion (m) de cations métalliques à la proportion (n) de l'agent complexant est m : n avec m≥1 et/ou n≥1, de préférence le rapport m/n est compris entre 0.1 et 3, de préférence compris entre 0.5 et 1.

En outre, l'invention concerne aussi un procédé d'échange d'ions, dans lequel on met en contact un matériau adsorbant avec au moins une solution aqueuse selon l'invention, ayant un pH supérieur à 5 et contenant, en outre, des cations métalliques d'au moins un métal et au moins un agent complexant desdits cations métalliques, de manière à réaliser une incorporation par échange d'ions d'au moins une partie des cations métalliques dans ledit adsorbant.

Selon le cas, le procédé d'échange d'ions de l'invention peut inclure l'une ou plusieurs des caractéristiques suivantes :

- l'incorporation par échange d'ions est effectué par percolation ou par trempage de l'adsorbant avec ladite solution.
- l'adsorbant est au moins une zéolite, de préférence agglomérée avec au moins un liant.
- l'adsorbant est au moins une zéolite de type faujasite (X ou LSX) ou A, de préférence une zéolite faujasite ayant un rapport Si/Al de 1 à 1.25.
- la mise en contact du matériau adsorbant avec la solution aqueuse est réalisée à une température comprise entre 5°C et 120°C, de préférence comprise entre 20°C et 100°C, préférentiellement encore entre 30°C et 80°C.
- l'adsorbant est, en outre, échangé par des cations d'au moins un deuxième métal, de préférence des cations lithium. Cette autre échange d'ions pouvant être effectué préalablement et/ou subséquemment à l'échange d'ions réalisé avec la solution aqueuse selon l'invention.

Selon un autre aspect, l'invention concerne aussi un procédé de fabrication d'adsorbant, en particulier des particules de zéolite, mettant en oeuvre au moins une étape d'échange d'ions durant laquelle l'adsorbant est mis en contact avec au moins une solution aqueuse selon l'invention, ayant un pH supérieur à 5 et contenant, en outre, des cations métalliques d'au moins un métal et au moins un agent complexant desdits cations métalliques, de manière à réaliser une incorporation par échange d'ions d'au moins une partie des cations métalliques dans ledit adsorbant selon un procédé d'échange d'ions selon l'invention.

A titre indicatif, on peut se reporter au document EP-A-785170 incorporé ici par références.

De plus, l'invention a trait aussi à un adsorbant, de préférence sous forme agglomérée, susceptible d'être obtenu par un procédé d'échange d'ions selon l'invention, et contenant des cations métalliques d'au moins un métal, de préférence le zinc.

En outre, selon encore un autre aspect, l'invention concerne des particules de zéolite X, LSX ou A, de préférence de zéolite X ou LSX sous forme agglomérée, échangée par des cations zinc selon un procédé d'échange d'ions selon l'invention, et contenant, par ailleurs, des cations lithium, et comprenant éventuellement de 0.5 à 30% en poids d'un liant, en particulier d'une argile, telle l'attapulgite, la bentonite, le kaolin ou analogues.

Par ailleurs, l'invention propose aussi un procédé de séparation ou de purification par adsorption d'un mélange gazeux mettant en oeuvre des particules d'adsorbant ou de zéolite selon l'invention, de préférence un procédé d'adsorption type PSA, TSA ou VSA.

De préférence, le procédé d'adsorption met en oeuvre au moins un adsorbeur, de préférence de 1 à 3 adsorbeurs, préférentiellement des adsorbeurs à géométrie radiale. Dans ce cas, l'invention s'applique à chacun des adsorbeurs d'un procédé d'adsorption mettant en oeuvre plusieurs adsorbeurs.

En outre selon ce procédé d'adsorption, le mélange gazeux est choisi parmi : un mélange gazeux contenant essentiellement de l'azote et de l'oxygène, notamment l'air ; un mélange gazeux contenant essentiellement de l'hydrogène et/ou du monoxyde de carbone, notamment un gaz de synthèse ; un mélange gazeux contenant essentiellement un ou plusieurs hydrocarbures, notamment une ou des oléfines ; et un mélange gazeux contenant du dioxyde de carbone et/ou de la vapeur d'eau, notamment l'air.

Lorsque le flux gazeux à séparer comprend de l'azote et au moins un composé gazeux moins polaire, notamment de l'oxygène, alors, de préférence, le flux gazeux est de l'air, le premier composé gazeux étant l'azote et le deuxième composé gazeux étant l'oxygène. L'air étant, dans le cadre de la présente invention, l'air contenu à l'intérieur d'un bâtiment ou d'une enceinte chauffée ou non, ou l'air extérieur, c'est-à-dire dans les conditions atmosphériques, pris tel quel ou éventuellement prétraité. Dans ce cas, on produit un flux gazeux riche en oxygène, c'est-à-dire comprenant, en général, au moins environ 90% d'oxygène.

Lorsque le flux gazeux est un gaz de synthèse, alors, dans cas, on produit un flux gazeux riche en hydrogène, c'est-à-dire comprenant, en général, au moins environ 80% d'hydrogène.

En outre, le procédé d'adsorption peut comprendre l'une ou plusieurs des caractéristiques suivantes :

- la pression haute d'adsorption est comprise entre $10^5$ Pa (1 bar) et $10^7$ Pa (100 bar), de préférence, de l'ordre de $10^5$ Pa à $3.10^6$ Pa (30 bar).
- la pression basse de désorption est comprise entre $10^4$ Pa (0.1 bar) et $10^6$ Pa (10 bar), de préférence, de l'ordre de $10^4$ (0.1 bar) Pa à $10^5$ Pa (1 bar).
- la température du gaz d'alimentation est comprise entre -50°C et +200°C, de préférence comprise entre 10°C et 80°C, de préférence encore entre 25°C et 60°C.
- le matériau adsorbant zéolitique est choisi parmi les faujasites ou les zéolites A, avantageusement une zéolite X ayant un rapport Si/Al égal à approximativement 1, une telle zéolite est appelée zéolite LSX (Low Silica X) ou zéolite pauvre en silice. Une telle zéolite X peut contenir au moins 80% de cations $Li^+$, de préférence au moins 86%, et/ou au plus 96% de cations $Li^+$, et/ou au plus 15% de cations $Na^+$, de préférence au plus 14%, préférentiellement encore au plus 12%, et/ou au moins 4% de cations $Na^+$, et/ou au plus 5% de cations $Mg^{2+}$, de préférence au plus 2%, et/ou au moins 0.1 % de cations $Mg^{2+}$, de préférence au moins 0.2%, et/ou au plus 8% de cations $Ca^{2+}$, de préférence au plus 5%, et/ou au moins 0.2 % de cations $Ca^{2+}$, de préférence au moins 1%, et/ou au plus 3% de cations $K^+$, de préférence au plus 1%, préférentiellement, au plus 0.5%.

L'invention va maintenant être décrite plus en détail à l'aide d'un exemple de réalisation, donné à titre illustratif mais non limitatif.

Exemple

La présente invention est illustrée par un procédé d'introduction de cations zinc dans des particules adsorbantes de zéolite de type X, c'est-à-dire un procédé d'échange d'ions, dans des conditions de pH qui assurent l'intégrité de la structure de la zéolite, empêchent la précipitation du zinc où que ce soit, et permettent de travailler avec des solutions d'échange d'ions concentrées.

Selon l'invention, on utilise une solution d'échange contenant un agent complexant doux du zinc.

Par exemple, en tant qu'agent complexant doux du zinc, on peut utiliser de l'acide citrique et plus précisément l'ion citrate.

La réaction de complexation du zinc par l'acide citrique, c'est-à-dire le ligand L, est de stoechiométrie de 1 : 1 et peut être illustrée comme suit :

$$Zn^{2+} + L^{n-} \longleftrightarrow ZnL^{2-n} \tag{III}$$

La constante d'équilibre K est :

$$K = \frac{\left[ZnL^{2-n}\right]}{\left[Zn^{2+}\right] * \left[L^{n-}\right]} \tag{III}$$

avec pour l'acide citrique : $K=10^{4.6}$.

Il est à noter que les réactions plus complexes avec des stoechiométries n : m où n et m sont des entiers (avec n : m différent de 1 : 1) font aussi partie de l'invention.

Or, l'acide citrique (de formule schématique : $LH_3$) est un tri-acide qui connaît trois étapes de dissociation :

$$LH_3 \leftrightarrow LH_2^- + H^+, \quad K_1 = 8.2*10^{-4}$$
$$LH_2^- \leftrightarrow LH^{2-} + H^+, \quad K_2 = 1.8*10^{-5} \tag{IV}$$
$$LH^{2-} \leftrightarrow L^{3-} + H^+, \quad K_3 = 4.0*10^{-6}$$

Il est à noter que des composés présentant des fonction acide plus ou moins nombreuses font aussi partie de l'invention.

Lorsque le pH et la concentration totale en zinc et en acide citrique et ions citrates sont connus, la résolution des équations (IV) permet de calculer la concentration de zinc libre (sous forme $Zn^{2+}$) dans la solution aqueuse et donc de tester si le produit de solubilité atteint la valeur critique.

On veut, par ailleurs, réaliser l'échange des ions initialement présents dans la zéolite avec le zinc.

Par exemple, avec une zéolite Z contenant du sodium $Na_2Z$, on a, lors de l'échange des ions sodium avec les ions zinc :

$$Zn^{2+} + Na_2Z \leftrightarrow 2Na^+ + ZnZ \tag{V}$$

Dès lors, les conditions que l'on fixe sur le complexe sont d'assurer une concentration de zinc à la fois assez faible pour que le produit de solubilité n'atteigne pas la valeur critique et assez forte pour que l'échange avec les cations de la zéolite soit encore possible.

En effet, un agent complexant qui capterait la totalité des ions zinc ne pourrait plus permettre la pénétration du zinc dans la zéolite.

En d'autres termes, selon l'invention, on utilise un agent complexant du zinc qui ne complexe pas la totalité des cations zinc, de manière à ce qu'il reste une fraction de zinc libre suffisante en solution pour assurer l'échange d'ions avec la zéolite, dans des conditions d'alcalinité compatibles avec le respect de la zéolite.

A titre d'exemple, on prépare :

- une solution de chlorure de zinc à 0.25 M, qui est mise en contact, à 30°C, avec de la zéolite LSX anhyde dans les proportions de 100 g de zéolite pour 110 ml de solution. Cette préparation est appelée "échantillon N°1" ;
- une solution contenant un mélange de chlorure de zinc à 0.25 M et de citrate monosodique à 0.25 M, qui est mise en contact, à 30°C, avec de la zéolite LSX anhyde dans les proportions de 100 g de zéolite pour 110 ml de solution. Cette préparation est appelée "échantillon N°2" ;
- une solution contenant un mélange de chlorure de zinc à 0.25 M et de citrate monosodique à 0.15 M, qui est mise en contact, à 30°C, avec de la zéolite LSX anhydre dans les proportions de 100 g de zéolite pour 110 ml de solution. Cette préparation est appelée "échantillon N°3" ; et

- une solution contenant un mélange de chlorure de zinc à 0.25 M et de citrate trisodique à 0.25 M, qui est mise en contact, à 30°C, avec de la zéolite LSX anhydre dans les proportions de 100 g de zéolite pour 110 ml de solution. Cette préparation est appelée "échantillon N°4".

Périodiquement, une partie de chaque solution est prélevée après homogénéisation et l'on détermine sur celle-ci la quantité de zinc résiduel.

Les résultats sont donnés dans le tableau suivant.

Tableau

| Echantillon N° | pH final | Teneur en zinc dans la solution aqueuse | | | | |
|---|---|---|---|---|---|---|
| | | initiale | après 0 minutes | après 10 minutes | après 20 minutes | après 60 minutes |
| 1 | 6.98 | 0.25 | 0.11 | 0 | 0 | 0 |
| 2 | 6.26 | 0.25 | 0.17 | 0.11 | 0.11 | 0.11 |
| 3 | 6.26 | 0.25 | 0.16 | 0.08 | 0.08 | 0.07 |
| 4 | 7.12 | 0.25 | 0.23 | 0.22 | 0.22 | 0.21 |

On constate que l'échange de zinc entre la solution et la zéolite LSX reste possible en présence du complexant et que le taux résiduel de zinc dans la solution peut être adapté au besoin en faisant varier le type de sel utilisé, le pH et les proportions stoechiométriques.

En l'absence de sel d'acide citrique, on observe un précipité abondant d'hydroxyde de zinc, tandis qu'en présence de tel sel, la solution reste claire.

De là, conformément à l'invention, on procède à l'échange au zinc de la zéolite en présence d'un agent complexant du zinc tel qu'en présence de quantités stoechiométriques, il reste entre 1 % et 30 % d'ions $Zn^{2+}$ libres par rapport à la quantité totale d'éléments zinc, dans une zone de pH préférentiellement supérieur à 6.5.

L'échange peut être effectué par trempage ou par percolation.

Il est à noter que cet échange au zinc peut être précédé ou suivi d'un autre échange, par exemple avec des cations lithium.

La présente invention n'est pas limitée à une solution contenant des cations de zinc et son utilisation dans un procédé de fabrication de zéolite mettant en oeuvre une ou plusieurs étapes d'échange de la zéolite par des cations de zinc, mais s'applique également à toutes les solutions aqueuses contenant un ou des autres métaux différents du zinc mais engendrant des problèmes analogues à ceux du zinc, en particulier des problèmes de précipitations en solution.

**Revendications**

1. Solution aqueuse, en particulier utilisable dans un procédé d'échange ions, ayant un pH supérieur à 5 et contenant des cations métalliques d'au moins un métal et au moins un agent complexant desdits cations métalliques, dans laquelle la proportion de cations métalliques libres en solution représente de 0.1 % à 99 % de la quantité totale dudit métal dans ladite solution.

2. Solution selon la revendication 1, caractérisée en ce que la proportion de cations métalliques libres en solution représente de 0.1 % à 50 % de la quantité totale dudit métal dans ladite solution, de préférence de 1 % à 30%.

3. Solution selon l'une des revendications 1 ou 2, caractérisée en ce que le pH est supérieur à 6, de préférence le pH est supérieur ou égal à 6.5, préférentiellement le pH est compris entre 7 et 10 environ.

4. Solution selon l'une des revendications 1 à 3, caractérisée en ce que la concentration totale en ledit métal est d'au moins 0.02 M, de préférence d'au moins 0.05 M, préférentiellement d'au moins 0.15 M.

5. Solution selon l'une des revendications 1 à 4, caractérisée en ce que les cations métalliques sont des cations divalents, de préférence les cations métalliques sont choisis dans le groupe formé par les cations de métaux alcalino-terreux, de métaux de transition et des lanthanides, et leurs mélanges.

6.  Solution selon l'une des revendications 1 à 5, caractérisée en ce que les cations métalliques sont sous forme de sel soluble, par exemple sous forme de chlorure.

7.  Solution selon l'une des revendications 1 à 6, caractérisée en ce que les cations métalliques sont des cations de zinc, de nickel ou de calcium, de préférence des cations zinc.

8.  Solution selon l'une des revendications 1 à 7, caractérisée en ce que l'agent complexant est un acide selon la définition de Lewis ou de Brônstedt ou un sel d'un tel acide, éventuellement au moins partiellement dissocié en ions en solution, en particulier, l'agent complexant est l'acide citrique ou un sel mono-, di- ou trisodique de l'acide citrique.

9.  Solution selon l'une des revendications 1 à 8, caractérisée en ce que le rapport stoechiométrique de la proportion (m) de cations métalliques à la proportion (n) de l'agent complexant est m : n avec m$\geq$1 et/ou n$\geq$1, de préférence le rapport m/n est compris entre 0.5 et 3.

10. Procédé d'échange d'ions, dans lequel on met en contact un matériau adsorbant avec au moins une solution aqueuse selon l'une des revendications 1 à 9, ayant un pH supérieur à 5 et contenant, en outre, des cations métalliques d'au moins un métal et au moins un agent complexant desdits cations métalliques, de manière à réaliser une incorporation par échange d'ions d'au moins une partie des cations métalliques dans ledit adsorbant.

11. Procédé d'échange d'ions selon la revendication 10, caractérisé en ce que l'incorporation par échange d'ions est effectué par percolation ou par trempage de l'adsorbant avec ladite solution.

12. Procédé d'échange d'ions selon l'une des revendications 10 ou 11, caractérisé en ce que l'adsorbant est au moins une zéolite, de préférence agglomérée avec au moins un liant.

13. Procédé d'échange d'ions selon l'une des revendications 10 à 12, caractérisé en ce que l'adsorbant est au moins une zéolite de type faujasite, X ou A, de préférence une zéolite X ayant un rapport Si/Al de 1 à 1.25.

14. Procédé d'échange d'ions selon l'une des revendications 10 à 13, caractérisé en ce que la mise en contact du matériau adsorbant avec la solution aqueuse est réalisée à une température comprise entre 5°C et 120°C, de préférence comprise entre 20°C et 100°C, préférentiellement encore entre 30°C et 80°C.

15. Procédé d'échange d'ions selon l'une des revendications 10 à 14, caractérisé en ce que l'adsorbant est, en outre, échangé par des cations d'au moins un deuxième métal, de préférence des cations lithium.

16. Adsorbant, de préférence sous forme agglomérée, susceptible d'être obtenu par un procédé selon l'une des revendications 10 à 15, contenant des cations métalliques d'au moins un métal, de préférence le zinc.

17. Particules de zéolite X ou A, de préférence de zéolite X sous forme agglomérée, échangée par des cations zinc selon un procédé selon l'une des revendications 10 à 15 et contenant, par ailleurs, des cations lithium et/ou calcium, et comprenant éventuellement de 0.5 à 30% en poids d'un liant, en particulier d'une argile.

18. Procédé de séparation ou de purification par adsorption d'un mélange gazeux mettant en oeuvre des particules d'adsorbant selon l'une des revendications 16 ou 17, de préférence un procédé d'adsorption type PSA, TSA ou VSA.

19. Procédé d'adsorption selon la revendication 18, caractérisé en ce qu'il met en oeuvre au moins un adsorbeur, de préférence de 1 à 3 adsorbeurs, préférentiellement des adsorbeurs à géométrie radiale.

20. Procédé d'adsorption selon l'une des revendications 18 ou 19, caractérisé en ce que le mélange gazeux est choisi parmi :

    -   un mélange gazeux contenant essentiellement de l'azote et de l'oxygène, notamment l'air,
    -   un mélange gazeux contenant essentiellement de l'hydrogène et/ou du monoxyde de carbone, notamment un gaz de synthèse,

- un mélange gazeux contenant essentiellement un ou plusieurs hydrocarbures, notamment une ou des oléfines, et

- un mélange gazeux contenant du dioxyde de carbone et/ou de la vapeur d'eau, notamment l'air.

21. Procédé de fabrication d'adsorbant, en particulier de particules de zéolite, mettant en oeuvre au moins une étape d'échange d'ions durant laquelle l'adsorbant est mis en contact avec au moins une solution aqueuse selon l'une des revendications 1 à 9, ayant un pH supérieur à 5 et contenant, en outre, des cations métalliques d'au moins un métal et au moins un agent complexant desdits cations métalliques, de manière à réaliser une incorporation par échange d'ions d'au moins une partie des cations métalliques dans ledit adsorbant selon un procédé d'échange d'ions selon l'une des revendications 10 à 15.

Office européen
des brevets

**RAPPORT DE RECHERCHE EUROPEENNE**

Numéro de la demande

EP 00 40 1508

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | DD 289 026 A (VEB CHEMIE UND TANKANLAENBAU) 18 avril 1991 (1991-04-18) * le document en entier * | 1-21 | B01J20/18 B01J39/14 B01D53/04 |
| A | DD 289 027 A (VEB CHEMIE UND TANKANLAGENBAU) 18 avril 1991 (1991-04-18) * le document en entier * | 1-21 | |
| A | US 5 206 195 A (S. ANDO) 27 avril 1993 (1993-04-27) * colonne 32; exemple 19 * * revendications 18,19 * | 1-15 | |
| A | EP 0 893 157 A (CECA) 27 janvier 1999 (1999-01-27) * page 7; exemple 6 * | | |
| D,A | US 5 419 891 A (C.G. COE) 30 mai 1995 (1995-05-30) * colonne 6, ligne 37 - ligne 42 * | | |
| D,A | EP 0 785 170 A (L'AIR LIQUIDE) 23 juillet 1997 (1997-07-23) * colonne 9, ligne 15 - ligne 31 * | | DOMAINES TECHNIQUES RECHERCHES (Int.Cl.7) B01J B01D C01B |

Le présent rapport a été établi pour toutes les revendications

| Lieu de la recherche | Date d'achevement de la recherche | Examinateur |
|---|---|---|
| LA HAYE | 18 octobre 2000 | Hilgenga, K |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**          EP 00 40 1508

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-10-2000

| Document brevet cité au rapport de recherche | | Date de publication | Membre(s) de la famille de brevet(s) | | Date de publication |
|---|---|---|---|---|---|
| DD 289026 | A | 18-04-1991 | AUCUN | | |
| DD 289027 | A | 18-04-1991 | AUCUN | | |
| US 5206195 | A | 27-04-1993 | JP | 4254412 A | 09-09-1992 |
| | | | JP | 4108608 A | 09-04-1992 |
| | | | JP | 4202010 A | 22-07-1992 |
| | | | CA | 2043692 A | 01-12-1991 |
| | | | DE | 4117964 A | 16-01-1992 |
| | | | JP | 4119913 A | 21-04-1992 |
| | | | JP | 4292412 A | 16-10-1992 |
| EP 893157 | A | 27-01-1999 | FR | 2766476 A | 29-01-1999 |
| | | | CA | 2242621 A | 22-01-1999 |
| | | | CN | 1211468 A | 24-03-1999 |
| | | | JP | 11076810 A | 23-03-1999 |
| US 5419891 | A | 30-05-1995 | US | 5258058 A | 02-11-1993 |
| | | | BR | 9303992 A | 12-04-1994 |
| | | | CA | 2107144 A | 06-04-1994 |
| | | | CN | 1087553 A,B | 08-06-1994 |
| | | | CN | 1148568 A,B | 30-04-1997 |
| | | | EP | 0591919 A | 13-04-1994 |
| | | | FI | 934348 A | 06-04-1994 |
| | | | JP | 2105290 C | 06-11-1996 |
| | | | JP | 6198118 A | 19-07-1994 |
| | | | JP | 8004704 B | 24-01-1996 |
| | | | KR | 9616518 B | 14-12-1996 |
| | | | MX | 9306167 A | 30-06-1994 |
| | | | NO | 933540 A | 06-04-1994 |
| | | | NO | 974317 A | 06-04-1994 |
| | | | US | 5417957 A | 23-05-1995 |
| | | | ZA | 9307342 A | 04-04-1995 |
| EP 785170 | A | 23-07-1997 | FR | 2743798 A | 25-07-1997 |
| | | | DE | 69608405 D | 21-06-2000 |
| | | | JP | 10029816 A | 03-02-1998 |
| | | | US | 5919287 A | 06-07-1999 |

EPO FORM P0460

Pour tout renseignement concernant cette annexe : voir Journal Officiel de l'Office européen des brevets, No.12/82